# DEMANDE DE BREVET EUROPEEN

(11) **EP 2 425 882 A1**
(43) Date de publication de la demande: **07.03.2012**
(21) Numéro de dépôt: 11290376.0
(22) Date de dépôt: 17.08.2011
(51) Int. Cl.: B01D 3/00, B01D 3/32, B01J 8/02, B01J 8/04, B01D 3/20

(54) **Diapositif de distribution d'un mélange polyphasique comportant un plateau brise-jet perforé avec differents types de trous**

(30) Priorité: 03.09.2010 FR 1003531; 03.09.2010 FR 1003532; 14.10.2010 FR 1004044
(71) Demandeur: IFP Energies nouvelles, 92852 Rueil-Malmaison Cedex (FR)
(72) Inventeur: Augier, Frederic, 69360 Saint Symphorien d'Ozon (FR); Bazer-Bachi, Frederic, 69230 St. Genis-Laval (FR); Boyer, Christophe, 69390 Charly (FR); Gagniere, Emilie, 69100 Villeurbanne (FR)

(57) **Abrégé**

La présente invention concerne un dispositif pour distribuer un mélange polyphasique constitué d'au moins une phase gazeuse et au moins une phase liquide, ledit mélange étant en écoulement descendant à travers au moins un lit de solides de particules, et ledit dispositif comportant au moins un plateau (1) situé au-dessus d'un lit de solides de particules, une pluralité de canaux mélangeurs (2) des phases liquide et gazeuse, un système dispersif de type plateau brise-jet (3) troué, muni sur une partie au moins de son périmètre de rebords (36), disposé au dessous des canaux mélangeurs (2) et au-dessus du lit de solides de particules, ledit dispositif de distribution étant caractérisé en ce que le système dispersif (3) comporte au moins deux types de trous (34,35).

## Description

La présente invention concerne le domaine de la distribution de fluides polyphasiques dans les réacteurs catalytiques et plus particulièrement un dispositif permettant d'optimiser la distribution de fluides dans les réacteurs catalytiques de type lits fixes, fonctionnant en écoulement descendant, dans les applications de type hydrotraitement de gazole et toutes opérations d'hydrogénation fonctionnant en écoulement gaz-liquide ruisselant.

La présente invention s'applique en particulier dans le domaine des distributeurs gaz/liquide comme par exemple ceux employés pour la mise en oeuvre des réactions d'hydrocraquage, d'hydrotraitement, d'hydrodésulfuration, d'hydrodémétallation, d'hydrodéazotation, d'hydrogénations sélectives ou totales, l'hydrogénation sélective des essences de vapocraquage, l'hydrogénation des composés aromatiques dans des coupes aliphatiques et/ou naphténiques, l'hydrogénation des oléfines dans des coupes aromatiques.

Elle trouve aussi son application pour mettre en oeuvre d'autres réactions nécessitant un bon mélange d'une phase gazeuse et d'une phase liquide, par exemple les réactions d'oxydation partielle ou totale, les réactions d'amination, d'acétyloxydation, d'ammoxydation et d'halogénation en particulier de chloration.

Le dispositif de distribution est donc en général disposé dans une enceinte ou réacteur comportant une entrée d'un fluide liquide et une entrée d'un fluide gazeux, et contenant au moins un lit par exemple de solides granulaires.

Ce dispositif peut être disposé :
- soit en tête de l'enceinte au dessus du lit,
- soit en sortie d'un lit avec une alimentation sur toute la section de l'enceinte sur le lit suivant.

Pour améliorer la distribution des fluides avec ces dispositifs, une des possibilités utilisée dans l'art antérieur consiste par exemple à utiliser des plateaux distributeurs comportant une pluralité de canaux mélangeurs dédiés au passage du gaz et du liquide. Ces canaux mélangeurs peuvent être de différents types et positionnés suivant différentes configurations sur le plateau. De tels dispositifs sont décrits dans les demandes de brevets FR 2 807 676, FR 2 745 202, FR 2 853 260 ou US 2007/0241467.

L'inconvénient de ce type de canaux mélangeurs provient du fait que l'écoulement en sortie de canal mélangeur forme un jet diphasique relativement concentré, ce qui est problématique car le liquide n'arrose pas toute la section de la colonne. Pour pallier à ce problème, le pas entre les canaux mélangeurs est relativement restreint (entre 80 et 200 mm en général) ce qui augmente considérablement la quantité de canaux mélangeurs et donc augmente le coût global du plateau distributeur.

Une autre solution pour améliorer l'arrosage du lit est de positionner sous les canaux mélangeurs des éléments de dispersion de jets. Il y a plusieurs types d'éléments de dispersion utilisables. Des éléments de types inserts sont souvent fixés à chaque canaux mélangeurs de manière à disperser le jet selon un angle plus large, et de manière homogène sous le canal mélangeur comme décrit dans les demandes de brevets EP 2 075 056 et US 2010/0019061.

Ce type de solution est efficace mais elle nécessite qu'une certaine hauteur soit respectée entre le canal mélangeur et le haut du lit de particules afin que le jet puisse arroser largement le lit. Idéalement cette hauteur doit permettre que les jets formés par des canaux mélangeurs voisins se rejoignent. De plus cette solution est assez onéreuse du fait du grand nombre d'éléments de dispersion à fabriquer.

Une solution alternative, décrite dans le brevet FR 2 807 673, consiste à positionner des éléments de dispersion de type brise-jet sous le plateau, communs à plusieurs canaux mélangeurs (voire commun à toute une rangée). Classiquement des grilles ou plaques perforées sont mises en oeuvre, Il est important que les différents éléments utilisés ne couvrent pas la totalité de la section de la colonne, de manière à ce que le gaz puisse circuler librement entre les éléments de dispersion, sans être contraint de traverser les éléments eux-mêmes. Le jet gaz-liquide impacte la grille et se disperse sur sa surface avant de tomber en pluie sur le lit de particules.

Le brevet FR 2 832 075 décrit une amélioration de ce dispositif qui consiste à rajouter des rebords uniquement sur le périmètre des grilles. Ces rebords permettent au liquide de rester au niveau de la grille et de ne pas se déverser par les côtés. Ce type de dispositif présente de nombreux avantages :
- il est moins coûteux que les inserts, permettant de plus d'augmenter le pas entre les canaux mélangeurs;
- l'écoulement est réparti sur la section de colonne donc il ne nécessite pas de distance de formation de jets sous les grilles.

L'inconvénient de ce type de dispositif est qu'il est limité à une certaine plage de fonctionnement. En effet, la géométrie de la grille est optimale dans une certaine plage de fonctionnement, c'est à dire pour des vitesses de gaz et de liquide telles que:
- les jets diphasiques sortant des cheminées soient suffisamment cassés par la grille, donc répartis sur une certaine surface en dessous de la cheminée,
- la rétention de liquide ne soit pas trop élevée sur la grille, donc que le liquide ne déborde par sur les côtés de la grille, et que ce niveau liquide ne pose pas trop de problèmes en cas d'écart du plateau à la planéité.

Ceci tend à limiter la plage optimale de fonctionnement des grilles. En général, il est préconisé de fonctionner toujours en deçà du débit liquide d'engorgement des grilles, c'est à dire d'utiliser une grille sur laquelle la charge liquide ne peut pas dépasser une certaine hauteur critique (comprise entre 0,1 et 1 mm), et donc d'utiliser des grilles relativement ouvertes (pourcentage d'ouverture entre 5 et 20%). En contrepartie lorsqu'un faible débit de liquide est appliqué dans les réacteurs, les grilles ne cassent pas bien le jet diphasique, et la distribution des fluides n'est pas optimale. Ceci est particulièrement vrai dans les opérations où le réacteur n'est pas utilisé avec sa capacité maximale (turndown selon la terminologie anglo-saxonne).

Il en résulte alors une mauvaise distribution du liquide dans le lit et une diminution des performances réactionnelles (perte de conversion et/ou de sélectivité). Ce type de problème se rencontre avec des canaux mélangeurs de type cheminée, mais peut également se rencontrer avec des canaux mélangeurs de type ascenseur de vapeur (également appelé vapor-lift selon la terminologie anglo-saxonne) ou de type canaux avec cloche (également appelé bubble cap selon la terminologie anglo-saxonne).

La présente invention a donc pour objet de palier un ou plusieurs des inconvénients de l'art antérieur en proposant un dispositif de distribution, comprenant un plateau brise-jet dont la plage de fonctionnement est améliorée permettant ainsi d'optimiser la distribution de l'écoulement liquide quelle que soit la vitesse des fluides.

Pour cela la présente invention propose un dispositif pour distribuer un mélange polyphasique constitué d'au moins une phase gazeuse et au moins une phase liquide, ledit mélange étant en écoulement descendant à travers au moins un lit de solides de particules, et ledit dispositif comportant au moins un plateau situé au-dessus d'un lit de solides de particules, une pluralité de canaux mélangeurs des phases liquide et gazeuse, un système dispersif de type plateau brise-jet troué, muni sur une partie au moins de son périmètre de rebords, disposé au dessous des canaux mélangeurs et au-dessus du lit de solides de particules, ledit dispositif de distribution étant caractérisé en ce que le système dispersif comporte au moins deux types de trous.

Selon un mode de réalisation de l'invention, le système dispersif comporte au moins un trou avec rebord et au moins un trou sans rebord.

Selon un mode de réalisation de l'invention, le trou avec rebord a une hauteur comprise entre 0,1 et 5 mm et un diamètre compris entre 2 et 20 mm.

Selon un mode de réalisation de l'invention, le trou sans rebord a un diamètre compris entre 2 et 20 mm.

Selon un mode de réalisation de l'invention, le trou avec rebord comporte un couvercle.

Selon un mode de réalisation de l'invention, le système dispersif comprend au moins une rangée de trous sans rebord alternée avec au moins une rangée de trous avec rebord.

Selon un mode de réalisation de l'invention, le système dispersif comprend au moins une rangée de trous comportant au moins un trou sans rebord alterné avec au moins un trou avec rebord.

Selon un mode de réalisation de l'invention, l'ensemble des trous est disposé en quinconce ou en carré ou en triangle, avec dans chaque cas un pas d'espacement régulier ou différent.

Selon un mode de réalisation de l'invention, la répartition des trous est différente suivant leur position par rapport au centre du réacteur.

Selon un mode de réalisation de l'invention, le système dispersif comprend au moins un élément de séparation formé par une plaque pleine ou percée ou poreuse, ayant la forme d'un parallélépipède rectangle plan, positionnée perpendiculairement au plateau brise-jet.

Selon un mode de réalisation de l'invention, l'élément de séparation a une hauteur comprise entre 20 et 100% de celle du rebord du plateau brise-jet et ferme entre 40 et 100% de la section transverse du plateau brise-jet.

Selon un mode de réalisation de l'invention, l'élément de séparation est positionné sous un canal mélangeur ou décalé par rapport à ce canal mélangeur de façon à se trouver positionné entre deux canaux mélangeurs.

Selon un mode de réalisation de l'invention, les canaux mélangeurs sont des cheminées ou des ascenseurs de vapeur ou des canaux avec cloche.

L'invention concerne également l'utilisation du dispositif tel que décrit précédemment dans un réacteur adapté pour les hydrotraitements ou les hydrogénations ou les oxydations.

D'autres caractéristiques et avantages de l'invention seront mieux compris et apparaîtront plus clairement à la lecture de la description faite, ci-après, en se référant aux figures annexées et données à titre d'exemple:
- la figure 1 est une représentation schématique vue de profil du dispositif de distribution selon l'invention,
- la figure 2 est une représentation schématique vue en perspective du dispositif de distribution selon l'invention,
- la figure 3 est une représentation schématique vue en perspective d'une variante du dispositif de distribution selon l'invention,
- la figure 4 est une représentation schématique vue en perspective d'une autre variante du dispositif de distribution selon l'invention,
- la figure 5 est une représentation schématique vue en perspective d'une autre variante du dispositif de distribution selon l'invention,
- la figure 6 est une représentation schématique vue de dessus d'une variante du dispositif de distribution selon l'invention,
- la figure 7 est une représentation schématique vue de coté d'un exemple d'utilisation du dispositif de distribution selon l'invention,
- la figure 8 est un graphique représentant la hauteur du niveau liquide en fonction de la vitesse spatiale liquide.

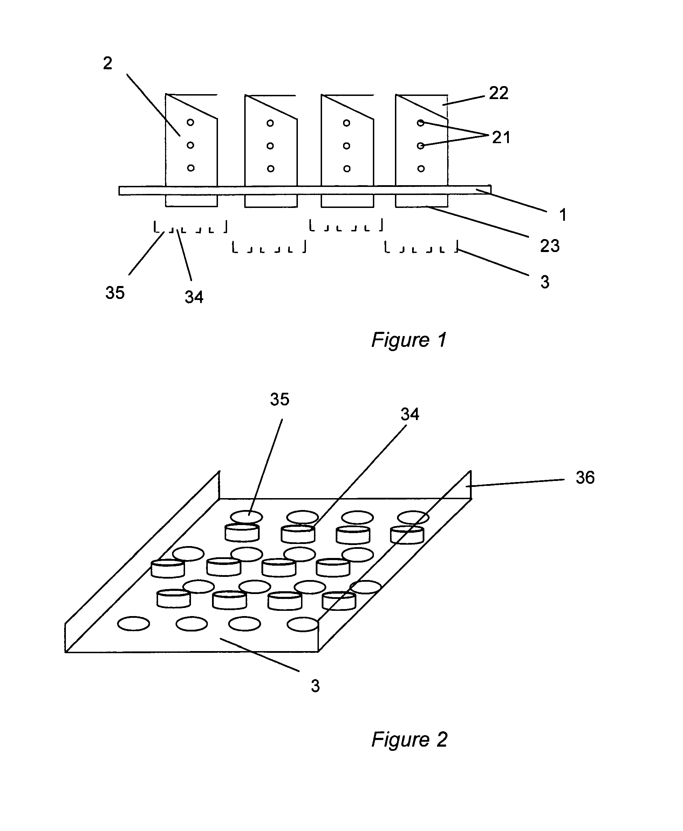

Comme illustré sur les figures 1 et 2, le dispositif selon la présente invention peut comporter une pluralité de canaux mélangeurs tels que des cheminées (2) ayant au moins une section de passage supérieure (22) par exemple un biseau au niveau de sa partie supérieure et une section de passage inférieure (23). Ces canaux mélangeurs peuvent comporter une pluralité de trous (21) permettant le passage du liquide. En dessous du plateau (1) un système dispersif type plateau brise-jet (3) reçoit le mélange polyphasique formé dans les canaux mélangeurs (2). La hauteur des canaux mélangeurs est le plus souvent comprise entre 100 et 500 millimètres (mm) de préférence entre 200 et 400 mm.

Selon un mode de réalisation de l'invention, les canaux mélangeurs peuvent également être des ascenseurs de vapeur. Le dispositif de type ascenseur de vapeur (plus connu sous le nom de vapor-lift selon la terminologie anglo-saxonne et décrit dans les brevets US 7 600 742 et US 5 942 162) est constitué de tubes formant un circuit de circulation du fluide en M. Le terme ascenseur s'explique par le fait que dans un premier temps la vapeur monte dans le dispositif par des tubes extérieurs et dans un deuxième temps la vapeur descend par le tube central.

Selon un autre mode de réalisation de l'invention, les canaux mélangeurs peuvent également être des canaux avec cloche (également appelées bubble cap selon la terminologie anglo-saxonne).

Les tubes des canaux mélangeurs dépassent du plateau (1) d'une hauteur qui varie habituellement entre 10 et 200 mm et souvent entre 25 et 50 mm. Le plus souvent le canal mélangeur se prolonge en dessous du plateau distributeur sur une longueur inférieure ou égale à la distance entre la sortie (23) d'un canal mélangeur et le plateau type brise-jet (3).

La partie des canaux mélangeurs (2) disposée au dessus du plateau est percée de trous (21) ou de fentes sur sa périphérie sur un ou plusieurs niveaux, de préférence au moins trois niveaux.

Le moyen d'assurer la dispersion du mélange biphasique ou polyphasique formé dans le canal mélangeur est un système dispersif de type brise-jet (3) situé en dessous et à proximité de la section de passage (23) des canaux mélangeurs. Ce système dispersif brise-jet est sous la forme d'un plateau brise-jet et peut être soit troué soit poreux. La distance entre la sortie (23) du canal mélangeur et le plateau brise-jet (3) varie le plus souvent de 5 à 500 mm, souvent de 10 à 200 mm et de préférence de 50 à 100 mm. Le plateau brise-jet est souvent constitué de plusieurs éléments séparés et disposés à des hauteurs différentes (par rapport à la sortie (23) des canaux mélangeurs) mais dont la totalité des surfaces recouvre la section du réacteur. Cette différence de distance entre les différents éléments du plateau brise-jet et la sortie (23) des canaux mélangeurs permet de laisser une section de passage libre pour le passage du gaz. Le plateau brise-jet (3) est situé à une distance du lit de solides granulaires choisie pour conserver le mélange formé à l'intérieur desdits canaux mélangeurs et sortant desdits canaux mélangeurs par lesdites sections de passage inférieures, jusqu'à sa distribution dans le lit de solides granulaires. Cette distance est habituellement comprise entre 0 et 500 mm, et de préférence entre 1 et 100 mm.

Le plateau brise-jet peut être suspendu au plateau (1) ou à l'extrémité inférieure des canaux mélangeurs (2).

Le plateau brise-jet (3) comporte également un rebord (36) permettant de contenir le liquide. Ce rebord (36) est disposé sur la totalité du plateau brise-jet (3), ces rebords pouvant éventuellement avoir eux-mêmes une porosité. Les rebords (36) peuvent avoir des hauteurs comprises entre 0,2 et 1 fois le diamètre des canaux et par exemple entre 2 et 50 mm. Ils peuvent avoir eux-mêmes une porosité comprise entre 0 et 80 %. Ils peuvent être inclinés ou non par rapport à la verticale, et leur inclinaison est généralement comprise entre -40° et +60° et préférentiellement entre - 30° et +45°, ces valeurs d'angle étant repérées par rapport à la verticale, les valeurs positives correspondant à des rebords inclinés vers l'extérieur du système dispersif, et les valeurs négatives correspondant à des rebords rentrant vers l'intérieur du système dispersif. Bien entendu, lorsque des systèmes dispersifs appartenant à des plans horizontaux différents sont munis de rebords, il faut que la distance séparant ces plans horizontaux soit supérieure à la hauteur des rebords. Les rebords (36) peuvent concerner une partie seulement des systèmes dispersifs, l'autre partie n'ayant pas de tels rebords. Il est préférable souvent d'équiper de rebords les systèmes dispersifs situés sur les plans les plus proches du lit de solide granulaire. Dans certains cas, il peut même être avantageux qu'un système dispersif donné possède des rebords sur une partie seulement de son périmètre. La forme géométrique précise de ces rebords peut varier, en particulier l'extrémité supérieure des rebords peut être incurvée. Au voisinage du rebord d'un système dispersif, la porosité du système dispersif peut être nulle ou identique au reste de la surface du système dispersif (3). On entend par voisinage du rebord d'un système dispersif, la zone située à une distance inférieure ou égale à 30 mm du rebord et préférentiellement inférieure ou égale à 20 mm du rebord.

Une des fonctions de ces rebords et de leur voisinage à porosité nulle, est d'effectuer une retenue vis à vis de certaines impuretés éventuellement contenues dans la charge liquide, particulièrement lorsque celle-ci est constituée d'hydrocarbures lourds tels que des coupes à point d'ébullition supérieur à 350°C, comme cela est le cas dans les unités d'hydrotraitement de coupes lourdes type gazole.

Dans ce cas, la zone de voisinage des rebords se charge progressivement en impuretés, évitant de la sorte la contamination du lit de solides granulaires.

Le plateau de type brise-jet selon l'invention comporte au moins deux types de trous ou perforations:
- des trous sans rebord (35), au niveau de la grille,
- des trous avec rebords (34), ou trous surélevés qui forme une surélévation par rapport au niveau de la grille et qui ne laissent passer l'écoulement que lorsque la garde liquide (c'est à dire le niveau du liquide sur le plateau brise-jet (3)) dépasse une certaine hauteur.

Les trous sans rebord (35) (illustré sur les figures 1 et 2) peuvent avoir un diamètre compris entre 2 et 20 mm et de préférence compris entre 2 et 15 mm. Un même plateau peut comporter des trous sans rebord (35) ayant différents diamètres.

Les trous avec rebords (34) ou cheminées (illustrés sur les figures 1 à 5), ayant la forme d'un tube, peuvent avoir un diamètre compris entre 2 et 20 mm, et de préférence compris entre 2 et 15 mm. Un même plateau peut comporter des trous avec rebords (34) ayant différents diamètres. La hauteur du rebord (340) des trous avec rebord (34) est comprise entre 0,1 mm et 20 mm, de préférence entre 0,5 mm et 10 mm. En général, la hauteur des rebords des trous est inférieure à la hauteur du rebord du plateau et de préférence comprise entre 5% et 50% de la hauteur du plateau.

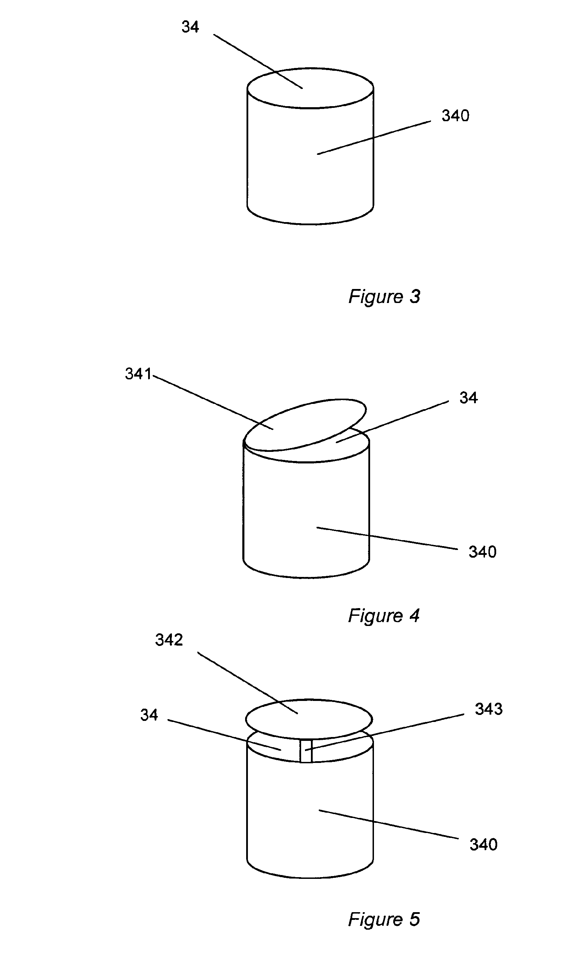

Ces trous avec rebord (34) peuvent comporter un couvercle (341, 342) ou capot comme illustré sur les figures 4 et 5. Le couvercle (341) peut être fixé partiellement et directement au rebord (340) du trou (34) (figure 4). De cette façon le trou reste en partie ouvert. Le couvercle (342) peut être fixé à l'aide d'au moins deux pattes (343) permettant au couvercle de rester à une certaine distance au dessus du rebord (figure 5). De cette façon le trou reste totalement ouvert mais protégé par le couvercle (342).

L'agencement sur le plateau, des trous avec rebord (34) de même hauteur ou de différente hauteur, de même diamètre ou de diamètre différent et de trous sans rebord (35) de même diamètre ou de diamètre différent, peut être fait de toutes les façons possibles et par exemple de l'une des façons suivantes mais non limitatives :
- au moins une rangée de trous sans rebord (35) alternée avec au moins une rangée de trous avec rebord (34),
- chaque rangée de trous peut comporter un trou sans rebord (35) alterné avec un trou à rebord (34),
- l'ensemble des trous (avec et sans rebord) peut être disposé en quinconce ou de toutes autres façons et par exemple en carré, ou en triangle, avec dans chaque cas un pas d'espacement régulier ou avec un pas d'espacement différent,
- une quantité plus grande de trous sans rebord (35) que de trous avec rebord (34), et par exemple chaque rangée peut comporter seulement quelques trous avec rebord (35),
- la répartition des trous avec rebord (35) peut être différente suivant leur position par rapport au centre du réacteur afin de prendre en compte une éventuelle flèche du plateau,
- des séries de trous avec rebord (34) de hauteur différente peuvent être alternées avec des trous sans rebord (35),
- des trous sans rebord (35) de diamètre différent avec des trous avec rebord (34) de diamètre et de hauteur différents,
- une quantité plus grande de trous avec rebord (34) que de trous sans rebord (35), et par exemple chaque rangée peut comporter seulement quelques trous sans rebord (35).

Le choix de nombre de trous avec (34) ou sans rebord (35), et leur diamètre, est effectué de façon à conserver un pourcentage d'ouverture du plateau brise-jet (3) compris en général entre 5 et 25%, et de préférence entre 5 et 20%.

Une mise en oeuvre préférée de l'invention est l'utilisation de trous sans rebord (35) de même diamètre, de même pas de perforation, avec des trous avec rebord (34) de quelques millimètres (0,5 - 3 mm), avec couvercle (341, 342). En effet, pour les faibles débits il est important de maintenir une densité de trous élevée pour bien distribuer le liquide en utilisant pour cela de faibles tailles de trous. Pour les débits plus élevés, il est surtout important de répartir l'excès de débit liquide sur toute la section du réacteur mais la densité en point d'injection est moins critique et le pas peut être un peu plus élevé. Le couvercle est nécessaire afin d'éviter que du liquide passe par ces trous en l'absence de niveau liquide sur le plateau brise-jet : il permettra de répartir le flux sortant de la cheminée sur une plus grande surface de grille pour les faibles vitesses spatiales liquide.

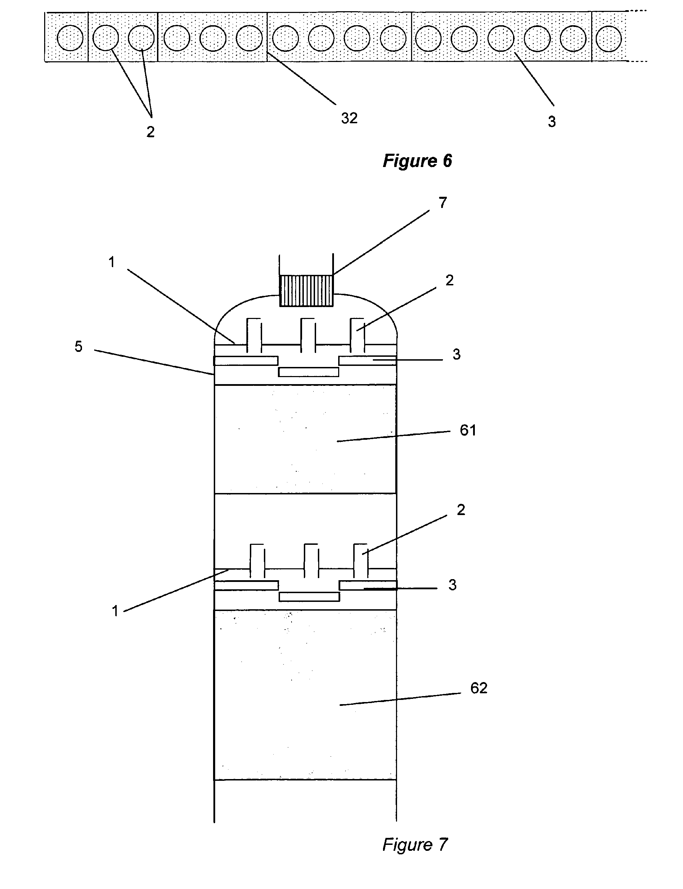

Étant donné que le plateau brise-jet selon l'invention est destiné à fonctionner avec un niveau liquide, la distribution sera sensible aux défaut d'horizontalité du plateau brise-jet et il est donc important de prévoir d'insérer des plaques séparatrices perpendiculaires au plateau brise-jet pour limiter les déséquilibres de l'écoulement liquide sur le plateau brise-jet en cas de défaut d'horizontalité et empêcher que le liquide ne s'accumule par gravité sur un même endroit du brise-jet et soit ensuite déversé de façon irrégulière sur le lit de particules. Selon un mode de réalisation de l'invention (illustré sur la figure 6), le plateau brise-jet (3) peut ainsi comporter au moins un élément de séparation (32), également appelé chicane. Le plateau brise-jet peut comporter un ou plusieurs éléments de séparation (32). Ces éléments de séparation peuvent être formés par des plaques positionnées perpendiculairement au plateau brise-jet. Ils ont en général une hauteur comprise entre 20 et 100% de celle du rebord (36) du plateau brise-jet (3), et de préférence entre 50 et 90%. Ils sont en général disposés dans le plan transverse du plateau brise-jet (3).

Selon un mode de réalisation de l'invention, les éléments de séparation (32) sont orientés selon le plan perpendiculaire au bord le plus long du plateau (3).

Ces éléments de séparation (32) peuvent être disposés de différentes façons. Ils peuvent être positionnés directement sous un canal mélangeur (2) de façon à disperser son écoulement. Ils peuvent être positionnés sous les canaux mélangeurs mais décalés par rapport aux canaux mélangeurs de façon à se trouver positionnés entre deux canaux mélangeurs.

Dans certains cas, le fléchissement mécanique des plateaux brise-jet (3) n'est pas homogène sur la section de colonne ou réacteur. Ce fléchissement déforme fortement le plateau près du bord, et moins fortement au centre, il est alors possible de distribuer les éléments de dispersion en fonction de leur position vis à vis du rebord (36) du plateau (3). La répartition des éléments de séparation (32) varie ainsi en fonction de leur position sur le plateau brise-jet (3). Par exemple les éléments de séparation (32) peuvent être disposés de façon arithmétique. Dans ce cas, les éléments de séparation (32) sont disposés entre les canaux mélangeurs (2) non pas de façon régulière, mais de façon à séparer un nombre différent de canaux mélangeurs (2) et par exemple tous les 1, 2, 3, 4 etc. canaux mélangeurs (2). Ils peuvent être également disposés en plus grand nombre au niveau des extrémités du plateau brise-jet (3), et par exemple, dans ces zones, tous les canaux mélangeurs (2) et au milieu tous les 2, 3, 4 etc. canaux mélangeurs (2). Ces exemples ne sont nullement limitatifs et toutes les positions des éléments de séparation (32) peuvent être envisagées. Par exemple les éléments de séparation (32) peuvent être disposés tous les 1 à 10 canaux mélangeurs, et de préférence tous les 1 à 5 canaux mélangeurs.

Ces éléments de séparation (32) peuvent avoir la forme d'un rectangle plan ou toutes autres formes adaptées au plateau brise-jet (3) utilisé. Les éléments de séparation (32) peuvent être pleins, percés ou poreux de manière à fermer partiellement ou totalement la section transverse du plateau brise-jet (3). Quelle que soit leur forme, les éléments de séparation ferment entre 40% et 100% de la section transverse du plateau, et de préférence entre 50% et 100%.

Les éléments de séparation (32) sont fixés au plateau brise-jet et au rebord (36) par des moyens de fixations classiques.

Le système de fixation des éléments de séparation (23) sur le plateau brise-jet (3) peut également être conçu pour obturer une partie du plateau brise-jet (3). Le système de fixation peut par exemple comporter des moyens de fixation comportant des moyens d'obturer ce type de plaque qui va boucher un ou plusieurs trous (35) sans rebord du plateau brise-jet (3). La plaque peut être de forme ronde, ovale, carrée, rectangle ou d'autres formes. La forme et la taille de la plaque étant choisies en fonction du nombre de trou ou de la surface du plateau brise-jet (3) devant être obstrué. Une telle plaque peut par exemple obstruer de un à plusieurs trous. La plaque peut être soudée ou fixée avec un système de fixation du type vis et écrou ou tout autre système de fixation adapté au dispositif selon l'invention.

La figure 7 illustre un mode d'utilisation simplifié du dispositif de distribution selon l'invention. La description donnée ci-après à titre d'exemple d'application concerne un système de distribution utilisé dans un réacteur fonctionnant en mode descendant adapté pour les hydrotraitements.

Le réacteur comporte une enceinte (5) comportant dans sa partie supérieure ou tête de réacteur, un prédistributeur (7). Le mélange distribué par le dispositif (7) s'écoule de manière descendante jusqu'au plateau distributeur (1) qui est situé au-dessus d'un premier lit de solides granulaires (61) ou lit catalytique. Le plateau comporte une pluralité de canaux mélangeurs (2) débouchant sur le plateau dispersif type brise-jet (3). Le mélange biphasique après son passage au travers du lit de solides granulaires (61) est redistribué directement sur un second lit de solides granulaires (62) après être passé à travers un deuxième dispositif selon la présente invention.

Les exemples qui suivent illustrent la présente invention.

### Exemples

Les exemples suivant illustrent la présente invention. Les calculs montrent l'évolution du niveau liquide sur le plateau brise-jet en fonction de la vitesse superficielle liquide (_{Vsl}). Pour un bon fonctionnement du brise-jet, il est préconisé d'utiliser une grille sur laquelle la hauteur liquide ne peut pas dépasser une certaine hauteur critique (comprise entre 0,1 et 1 mm).

Dans cette plage de hauteur, le brise-jet peut être considéré comme d'autant plus flexible que cela correspond à une large gamme de vₛₗ.

Tous les calculs sont réalisés avec une vitesse superficielle gaz v_{sg} de 10 cm.s⁻¹ et une pression de 10 MPa.

### Exemple 1 (comparatif)

Utilisation d'un plateau type brise-jet (3) avec des trous sans rebord (35). Les trous sont de 8 mm de diamètre pour un pas triangulaire de 36 mm.

### Exemple 2 (comparatif)

Utilisation d'un plateau type brise-jet (3) avec des trous sans rebord (35). Les trous sont de 8 mm de diamètre pour un pas triangulaire de 22,5 mm.

### Exemple 3 (selon l'invention)

Utilisation d'un plateau type brise-jet (3) avec des trous sans rebord (35) et avec des trous avec rebord (34). Les trous sont de 9 mm de diamètre pour un pas triangulaire de 25 mm. Les trous avec rebord sont de 0,5 mm de haut. L'agencement des trous sur le plateau est celle de rangées de trous sans rebord (35) alternés avec un trou avec rebord (34) (50% de chaque).

### Conclusion:

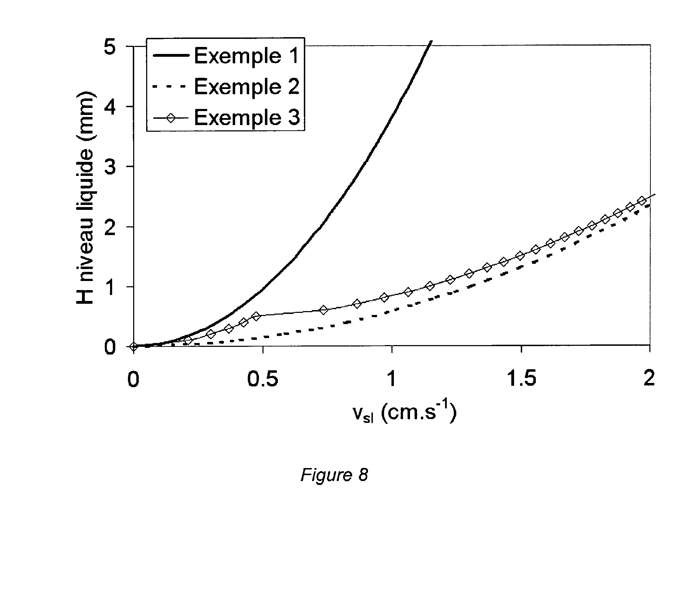

Les résultats pour chacun des exemples sont représentés sur la figure 8 qui représente la hauteur du niveau liquide (H niveau liquide en mm) en fonction de la vitesse spatiale liquide (Vₛₗ, en cm.s⁻¹) . Pour la gamme préconisée de hauteur liquide sur la grille (comprise entre 0,1 et 1 mm), les plages de fonctionnement sont les suivantes pour les différents plateaux type brise-jet (3) :
- exemple 1 : entre 0,15 et 0,5 cm.s⁻¹ ;
- exemple 2 : entre 0,4 et 1,3 cm.s⁻¹ ;
- exemple 3 : entre 0,2 et 1,2 cm.s⁻¹.

La gamme de fonctionnement du brise-jet avec deux types de trous est donc plus large, la grille fonctionnant avec une plus large gamme de débits.

La présente invention ne doit pas être limitée aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Dispositif pour distribuer un mélange polyphasique constitué d'au moins une phase gazeuse et au moins une phase liquide, ledit mélange étant en écoulement descendant à travers au moins un lit de solides de particules, et ledit dispositif comportant au moins un plateau (1) situé au-dessus d'un lit de solides de particules, une pluralité de canaux mélangeurs (2) des phases liquide et gazeuse, un système dispersif de type plateau brise-jet (3) troué, muni sur une partie au moins de son périmètre de rebords (36), disposé au dessous des canaux mélangeurs (2) et au-dessus du lit de solides de particules, ledit dispositif de distribution étant **caractérisé en ce que** le système dispersif (3) comporte au moins deux types de trous (34,35).

2. Dispositif selon la revendication 1, dans lequel le système dispersif (3) comporte au moins un trou avec rebord (34) et au moins un trou sans rebord (35).

3. Dispositif selon la revendication 2, dans lequel le trou avec rebord (34) a une hauteur comprise entre 0,1 et 20 mm et un diamètre compris entre 2 et 20 mm.

4. Dispositif selon une des revendications 2 à 3, dans lequel le trou sans rebord (35) a un diamètre compris entre 2 et 20 mm.

5. Dispositif selon une des revendications 2 à 4, dans lequel le trou avec rebord (34) comporte un couvercle (341, 342).

6. Dispositif selon une des revendications 2 à 5, dans lequel le système dispersif (3) comprend au moins une rangée de trous sans rebord (35) alternée avec au moins une rangée de trous avec rebord (34).

7. Dispositif selon une des revendications 2 à 5, dans lequel le système dispersif (3) comprend au moins une rangée de trous comportant au moins un trou sans rebord (35) alterné avec au moins un trou avec rebord (34).

8. Dispositif selon une des revendications 2 à 7, dans lequel l'ensemble des trous est disposé en quinconce ou en carré ou en triangle, avec dans chaque cas un pas d'espacement régulier ou différent.

9. Dispositif selon une des revendications 2 à 8, dans lequel la répartition des trous est différente suivant leur position par rapport au centre du réacteur.

10. Dispositif selon une des revendications 2 à 9, dans lequel le système dispersif (3) comprend au moins un élément de séparation (32) formé par une plaque pleine ou percée ou poreuse, ayant la forme d'un parallélépipède rectangle plan, positionnée perpendiculairement au plateau brise-jet (3).

11. Dispositif selon la revendication 10 dans lequel l'élément de séparation (32) a une hauteur comprise entre 20 et 100% de celle du rebord (36) du plateau brise-jet (3) et ferme entre 40 et 100% de la section transverse du plateau brise-jet (3).

12. Dispositif selon une des revendications 10 à 11 **caractérisé en ce que** l'élément de séparation (32) est positionné sous un canal mélangeur (2) ou décalé par rapport à ce canal mélangeur (2) de façon à se trouver positionné entre deux canaux mélangeurs (2).

13. Dispositif selon une des revendications 1 à 12 **caractérisé en ce que** les canaux mélangeurs sont des cheminées des ascenseurs de vapeur ou des canaux avec cloche.

14. Utilisation du dispositif selon une des revendications 1 à 13 dans un réacteur adapté pour les hydrotraitements ou les hydrogénations ou les oxydations.
